# EUROPÄISCHE PATENTANMELDUNG

(11) **EP 2 610 818 A2**
(43) Veröffentlichungstag der Anmeldung: **03.07.2013**
(21) Anmeldenummer: 12008661.6
(22) Anmeldetag: 28.12.2012
(51) Int. Cl.: G07C 9/00

(54) **"Gehäuse, insbesondere für einen elektronischen Schlüssel"**

(30) Priorität: 30.12.2011 DE 102011122596; 30.12.2011 DE 102011122600; 30.12.2011 DE 102011122601
(71) Anmelder: Marquardt GmbH, 78604 Rietheim-Weilheim (DE)
(72) Erfinder: Dufner, Michael, 78606 Seitingen-Oberflacht (DE); Bruss, Bruno, 78532 Tuttlingen (DE); Lanisnik-Bensch, Franz, 78532 Tuttlingen (DE)
(74) Vertreter: Otten, Roth, Dobler & Partner

(57) **Zusammenfassung**

Die Erfindung betrifft ein Gehäuse (2), insbesondere für einen elektronischen Schlüssel (1) eines Schließsystems eines Kraftfahrzeugs, das ein insbesondere aus einem Gehäuseunterteil (4") sowie einem Gehäuseoberteil (4') bestehendes Gehäuseteil (4) und eine abnehmbare Kappe (5) umfasst. Die Kappe (5) ist mittels wenigstens eines seitlich angeordneten Drückers (6) verriagelbar am Gehäuseteil (4) fixiert.

## Beschreibung

Die Erfindung betrifft ein Gehäuse nach dem Oberbegriff des Patentanspruchs 1 oder 6 oder 11.

Solche Gehäuse werden insbesondere für einen elektronischen Schlüssel, einen Identifikations(ID)-Geber o. dgl. eines Schließsystems in einem Kraftfahrzeug verwendet.

Schließsysteme für Kraftfahrzeuge sind zur Steigerung des Komforts für den Benutzer oft mit einem elektronischen Schlüssel ausgestattet. Nach entsprechender Betätigung durch den Benutzer wird zwischen dem Schlüssel und einem Steuergerät im Kraftfahrzeug ein Code, beispielsweise über elektromagnetische Wellen, ausgetauscht, so dass nach positiver Auswertung des Codes die Türen, der Kofferraumdeckel o. dgl, des Kraftfahrzeug fernbedienbar ent- und/oder verriegelt sowie sonstige Funktionen ausgelöst werden.

Ein derartiger elektronischer Schlüssel ist aus der DE 19915 969 A1 bekannt. Das Gehäuse des Schlüssels umfasst ein Gehäuseteil, das aus einem Gehäuseunterteil sowie einem Gehäuseoberteil bestehen kann, und eine abnehmbare Kappe und/oder eine am Gehäuseteil befestigte Spange, die insbesondere seitlich am Gehäuseteil befestigt ist. Bei unsachgemäßer Behandlung des Schlüssels, beispielsweise wenn dieser zu Boden fällt, besteht die Gefahr, dass sich die Kappe und/oder die Spange löst. Dabei können auch Teile des Schlüssels beschädigt werden, so dass der Schlüssel nicht mehr funktionsfähig ist.

Das Gehäuse des bekannten Schlüssels umfasst ein Gehäuseteil mit wenigstens einer Aufnahme, in der beispielsweise eine Batterie, ein Notschlüssel o. dgl. aufgenommen ist. Das Gehäuse besteht aus zwei Gehäuseteilen, wie aus einem Gehäuseunterteil sowie einem Gehäuseoberteil, wobei die beiden Gehäuseteile miteinander verschweißt sind. Es hat sich in manchen Fällen herausgestellt, dass das Gehäuse nach dem Verschweißen nicht dicht ist. In manchen Fällen mangelt es der Verschweißung auch an Stabilität. Dadurch ist wiederum die Funktionsfähigkeit des Schlüssels beeinträchtigt.

Der Erfindung liegt die Aufgabe zugrunde, das Gehäuse derart weiterzuentwickeln, dass ein Lösen der Kappe und/oder der Spange, insbesondere beim Herunterfallen des Schlüssels, weitgehend verhindert ist. Insbesondere soll die abnehmbare Kappe am Fahrzeugschlüssel so fixiert werden, dass die Fixierung nahezu klapperfrei und/oder spielfrei ausgeführt ist. Bevorzugterweise sollen desweiteren definierte Ausreißkräfte eingehalten werden. Insbesondere soll die Spange bzw. sollen zwei Spangen als Zierelemente an einem Fahrzeugschlüssel so befestigt werden, dass Positionsgenauigkeit und/oder Falltestsicherheit und/oder Klapperfreiheit gewährleistet sind.

Der Erfindung liegt die Aufgabe zugrunde, das Gehäuse derart auszugestalten, dass eine Beeinträchtigung an der Schweißnaht weitgehend verhindert ist. Insbesondere soll die Dichtheit und/oder Stabilität des Gehäuses verbessert werden. Insbesondere sollen zwei Gehäusehälften, beispielsweise eines Fahrzeugschlüssels, so miteinander verbunden werden, dass die Verbindung wasserdicht und/oder falltesttauglich ist.

Diese Aufgabe wird bei einem gattungsgemäßen Gehäuse durch die kennzeichnenden Merkmale des Anspruchs 1 oder 6 oder 11 gelöst.

Beim erfindungsgemäßen Gehäuse ist die Kappe mittels wenigstens eines Drückers verriegelbar am Gehäuseteil fixiert. Damit ist eine Fixierung der Kappe am Fahrzeugschlüssel geschaffen, womit ein Lösen der Kappe selbst bei unsachgemäßer Behandlung weitgehend verhindert ist. Weitere Ausgestaltungen der Erfindung sind Gegenstand der Unteransprüche.

In einfacher Art und Weise kann der Drücker seitlich und/oder oben und/oder unten an der Kappe angeordnet sein. Zur weiteren Verbesserung der Fixierung kann es sich anbieten, dass die Kappe von mehreren Drückern am Gehäuseteil gehalten ist. In kostengünstiger Weise genügen dabei insbesondere zwei Drücker.

Zur weiteren Verbesserung der Fixierung kann der Drücker wenigstens einen Führungssteg zur Fixierung am Gehäuseteil aufweisen. Zweckmäßigerweise kann dann ein Riegelelement am Führungssteg angeordnet sein. Weiterhin kann die Position des Drückers mittels einer Rastkulisse, die bevorzugterweise zylinderförmig ausgebildet ist, in Abzugsrichtung fixiert sein. Insbesondere ist dadurch die Fixierung weitgehend spielfrei und/oder klapperfei ausgestaltet. Insbesondere zur Vermeidung von Verkippungen kann die Kappe mittels eines Nut-Feder-Systems am Gehäuseteil gehalten sein.

Für eine besonders bevorzugte Ausgestaltung ist nachfolgendes festzustellen. Die Kappe wird über zwei Drücker seitlich grob fixiert. Um umlaufend um die Drücker ein gleichmäßiges Spaltmaß zu erreichen, wird über eine zusätzliche, zyfinderförmige oder auch andersartig ausgestaltete Rastkulisse die Position in Abzugsrichtung fixiert. Um ein Kippen der Kappe zu vermeiden, wird diese über ein Nut- und Federsystem gegen Drehung in Position gehalten. Zur Sicherstellung der vorgegebenen Ausreißkraft dienen die Drücker, die mit langen Führungen im Gehäuse fixiert sind.

Bei dem weiteren erfindungsgemäßen Gehäuse weist die Spange wenigstens eine Befesfigungslasche auf. Am Gehäuseteil ist eine zur Befestigungslasche korrespondierende Ausnehmung angeordnet. Die Spange ist mittels der Befestigungslasche in die Ausnehmung am Gehäuseteil gesteckt und vorfixiert. Erreicht wird so eine sichere Fixierung der Spange als ein Zierelement. Weitere Ausgestaltungen der Erfindung sind Gegenstand der Unteransprüche.

Die Sicherheit der Befestigung kann weiter dadurch erhöht werden, indem die Spange mittels Verklebung am Gehäuseteil fixiert ist Hierzu kann es sich anbieten, die Verklebung zwischen der Befestigungslasche und der Ausnehmung vorzunehmen.

Zur weiteren Verbesserung der Fixierung kann die Befestigungslasche tannenbaumförmig ausgestaltet sein. Die Spange kann zwei Befestigungslaschen aufweisen. Insbesondere können die Befestigungslaschen dann in etwa am jeweiligen Ende der Spange angeordnet sein.

Zwecks verbesserter Exaktheit der Fixierung kann am Gehäuseteil wenigstens ein Halteelement, bei dem es sich insbesondere um eine Einreitrippe handeln kann, für die Vorfixierung der Spange vorgesehen sein. Insbesondere erfolgt dadurch eine Zentrierung der Spange mittels des Halteelements beim Aufstecken am Gehäuseteil.

Um die Dauerhaftigkeit weiter zu steigern, kann die Spange aus Zinkdruckguss bestehen. Die Spange kann auf der nach dem Aufstecken am Gehäuseteil sichtbaren Oberfläche verchromt sein. Das Gehäuseteil kann aus Kunststoff bestehen, Eine derartige Ausgestaltung verbessert auch die Wertanmutung für den Schlüssel.

Für eine besonders bevorzugte Ausgestaltung ist nachfolgendes festzustellen. An die Spange werden zwei tannenbaumförmige Befestigungslaschen angebracht Die Spange wird über die Befestigungslaschen auf das Gehäuse gesteckt und vorfixiert. Die Zentrierung erfolgt über Einreitrippen am Gehäuse. Die endgültige Fixierung erfolgt durch eine Klebeverbindung zwischen der verchromten Spange aus Zinkdrockguss und dem aus Kunststoff bestehenden Gehäuse.

Bei dem abermals weiteren erfindungsgemäßen Gehäuse ist wenigstens ein Durchbruch und/oder eine Dünnstelle für die Aufnahme in dem einen Gehäuseteil, insbesondere im Gehäuseunterteil, vorgesehen. Ermöglicht ist dabei das Verschweißen von Gehäuseteilen mit Durchbrüchen und/oder Düntistellen, indem die notwendigen Durchbrüche und/oder Dünnstellen so abgestützt werden können, dass die Dichtheit und/oder Stabilität des Gehäuses gewährleistet ist. Weitere Ausgestaltungen der Erfindung sind Gegenstand der Unteransprüche.

In zweckmäßiger weiterer Ausgestaltung können die beiden Gehäuseteile, insbesondere das Gehäuseunterteil sowie das Gehäuseoberteil, aus Kunststoff bestehen. In einfacher sowie kostengünstiger Art und Weise kann das Verschweißen der beiden Gehäuseteile, insbesondere des Gehäuseunterteils mit dem Gehäuseoberteil, mittels Reibschweißen, Ultraschallschweißen, Laserschweißen, Quasi-Simultan-Laserschweißen o. dgl. erfolgen. Dabei kann das eine Gehäuseteil, insbesondere das Gehäuseunterteil, in einer festen, insbesondere unteren, Schweißaufnahme positioniert werden. Das andere Gehäuseteil, insbesondere das Gehäuseoberteil, kann in einer beweglichen, insbesondere oberen, Sahweißaufnahme positioniert werden. Der Durchbruch und/oder die Dünnstelle kann mittels eines mechanischen Schiebers beim Verschweißen abgestützt werden. Dadurch wird die Schweißebene beim Verschweißen der beiden Gehäuseteile weitgehend fixiert. Diese Fixierung und/oder Abstützung trägt zur weiteren Verbesserung der Dichtheit und/oder Stabilität des Gehäuses bei.

Die Erfindung stellt somit ein Verfahren zur Herstellung eines Gehäuses aus zwei Gehäuseteilen entsprechend den vorgenannten Verfahrensschritten bereit.

Für eine besonders bevorzugte Ausgestaltung ist nachfolgendes festzustellen. Die notwendigen Durchbrüche für Batteriefach und/oder Notschlüssel werden konstruktiv am Unterteil vorgesehen, welches in der festen, unteren Reibschweißaufnahme positioniert wird. Die Durchbrüche werden mit mechanischen Schiebern sehr genau abgestützt. Dadurch drückt sich die Schweißebene beim Verschweißen mit dem Oberteil in der beweglichen, oberen Reibschweißaufnahme nicht weg und es kann eine stabile und dichte Schweißung hergestellt werden. Selbstverständlich können anstelle von Reibschweißen auch andere Schweißverfahren zur Anwendung kommen.

Die mit der Erfindung erzielten Vorteile bestehen insbesondere darin, dass die Kappe in sicherer Weise abnehmbar am Gehäuseteil angeordnet ist. Desweiteren ist eine Beschädigung des Schlüssels mit Kappe, insbesondere beim Herunterfallen, weitgehend verhindert. Schließlich ist durch die Zentrierung über die insbesondere zylindrische Rastkulisse ein gleichmäßiges Spaltmaß um den Drücker ermöglicht.

Die weiteren mit der Erfindung erzielten Vorteile bestehen insbesondere darin, dass eine Beschädigung des Schlüssels mit Spange beim Herunterfallen weitgehend verhindert ist, Desweiteren ist durch die Zentrierung über Einreiteippen und Befestigungslaschen eine vollautomatische Fertigung des Schlüssels möglich.

Die abermals weiteren mit der Erfindung erzielten Vorteile bestehen insbesondere darin, dass die Dichtheit und/oder Stabilität des Gehäuses mit Aufnahme und damit die Funktionsfähigkeit des Schlüssels gewährleistet ist. Desweiteren ist eine falltesttaugliche und/oder dichte Schweißverbindung auch mit Durchbrüchen und/oder dünnen Wandstärken realisierbar. Schließlich ist die Herstellung des Gehäuses voll automatisierbar.

Ausführungsbeispiele der Erfindung mit verschiedenen Weiter bildungen und Ausgestaltungen sind in den Zeichmungen dargestellt und werden im folgenden näher beschrieben. Es zeigen
- Fig.: 1 einen elektronischen Schlüssel,
- Fig. 2: einen die Kappe umfassenden Abschnitt des Schlüssels in vergrößerter Darstellung,
- Fig. 3: einen Drücker als Einzelteil,
- Fig. 4: einen Schnitt entlang der Linie 4-4 in Fig. 2,
- Fig. 5: einen Schnitt entlang der Linie 5-5 in Fig, 2,
- Fig. 6: die Kappe als Einzelteil,
- Fig. 7: eine weiteren elektronischen Schlüssel,
- Fig. 8: den Schlüssel mit abgenommener Spange,
- Fig. 9: einen Detailausschnitt zur Fixierung der Spange,
- Fig. 10: einen Detailausschnitt zur Zentrierung der Spange,
- Fig. 11: einen nochmals weiteren elektronischen Schlüssel,
- Fig.12: das Gehäuse des Schlüssels in einer ersten Ausbildung
- Fig. 13: das Gehäuse des Schlüssels in einer zweiten Ausbildung und
- Fig. 14: das Gehäuse des Schlüssels in einer dritten Ausbildung.

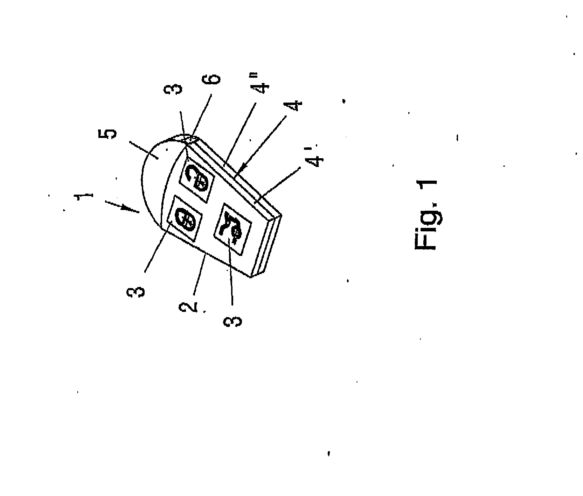

In Fig. 1 ist ein elektronischer Schlüssel 1 eines Schließsystems für ein Kraftfahrzeug zu sehen. Der Schlüssel 1 besitzt eine Gehäuse 2, an dem Betätigungsorgane 3 zur Auslösung verschiedener Funktionen am Kraftfahrzeug durch den Benutzer angeordnet sind. Beispielsweise lässt sich durch manuelle Betätigung der Betätigungsorgane 3 die Zentralverriegelung ver- und/oder entsperren sowie der Kofferaumdeckel öffnen, indem entsprechende codierte elektromagnetische Signale vom Schlüssel 1 zum Kraftfahrzeug gesendet werden. Weiterhin kann zusätlich zur Zugangsberechtigung zum Kraftfahrzeug durch Austausch entsprechender codierter elektromagnetischer Signale zwischen dem Schlüssel 1 und dem Kraftfahrzeug die Authentifikation des Schlüssels 1 zur Fahrberechtigung für das Kraftfahrzeug erfolgen

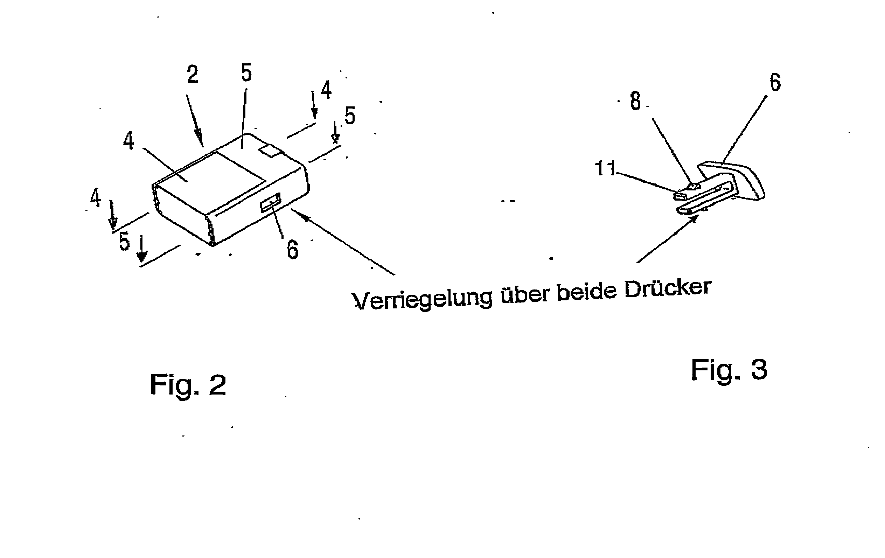

Das Gehäuse 2 umfasst ein Gehäuseteil 4 und eine abnehmbare Kappe 5. Das Gehäuseteil 4 wiederum besteht aus einem Gehäuseunterteil 4" sowie einem Gehäuseoberteil 4'. Nach Abnehmen der Kappe 5 besteht Zugang zum Inneren des Gehäuses 2, beispielsweise um die Batterie für den Schlüssel 1 zu wechseln und/oder um einen nicht weiter gezeigten mechanischen Notschlüssel aus dem Inneren des Gehäuses 2 zu entnehmen. Wie man weiter anhand von Fig. 2 sieht, ist die Kappe 5 mittels wenigstens eines seitlich angeordneten Drückers 6 verriegelbar am Gehäuseteil 4 fixiert. Selbstverständlich kann der Drücker 6 nicht nur seitlich sondern auch oben und/oder unten an der Kappe 5 angeordnet sein.

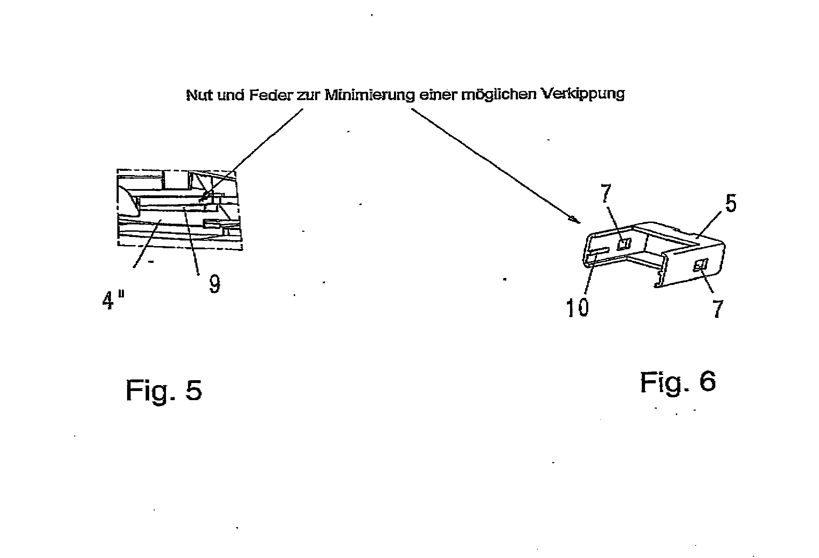

Nachdem die Kappe 5 auf das Gehäuseteil 4 aufgesteckt ist wird der Drücker 6 zur Fixierung der Kappe 5 durch die in Fig. 6 sichtbare Öffnung 7 an der Kappe 5 verriegelnd eingesteckt. Wie anhand der Fig. 6 zu erkennen ist, sind zur Fixierung zwei einander gegenüberliegende Drücker 6 vorgesehen. Falls notwendig können jedoch auch noch weitere Drücker vorgesehen sein.

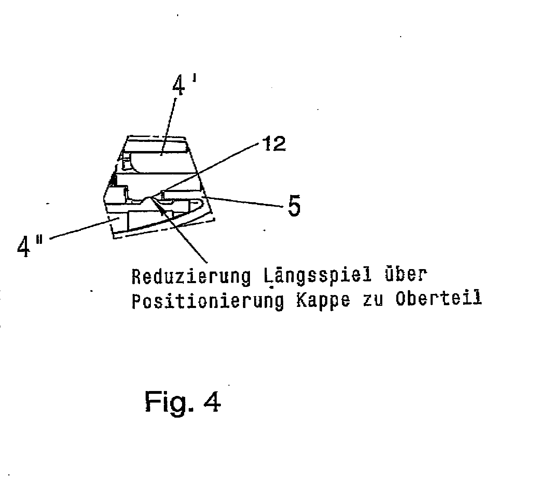

Wie weiter anhand der Fig. 3 zu sehen ist, weist der Drücker 6 wenigstens einen Führungssteg 11 zur Fixierung am Gehäuseteil 4 auf. Ein der Verrastung dienendes Riegelelement 8 ist am Führungssteg 11 angeordnet. Der Führungssteg 11 ist länglich federnd ausgestaltet, so dass die Verrastung der Verriegelung unter Sicherstellung einer genügenden Ausreißkraft gewährleistet ist. Die Position des Drückers 6 ist mittels einer, beispielsweise zylinderförmig ausgebildeten, Rastkulisse 12 in Abzugsrichtung fixiert, wie in Fig. 4 gezeigt ist. Aufgrund der Positionierung der Kappe 5 zum Gehauseoberteil 4' ist gemäß Fig. 4 eine Reduzierung des Längsspiels erreicht, so dass die Fixierung weitgehend spielfrei und/oder klapperfrei ausgestaltet ist.

Schließlich ist die Kappe 5 mittels eines Nut-Feder-Systems zur Vermeidung von Verkippungen am Gehäuseteil 4 gehalten. In Fig. 5 ist die Nut 9 im Gehäuseunterteil 4" und in Fig. 6 die Feder 10 in der Kappe 5 zu sehen.

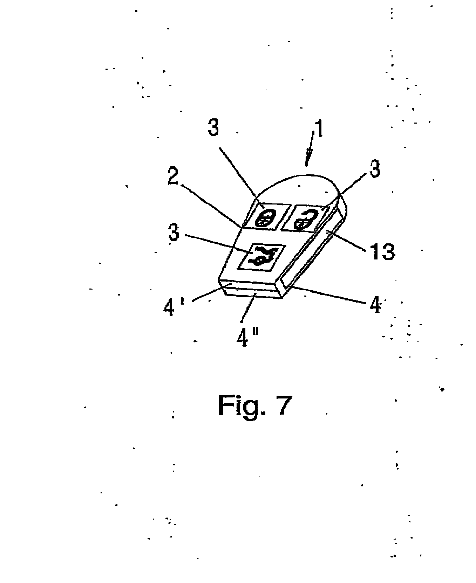

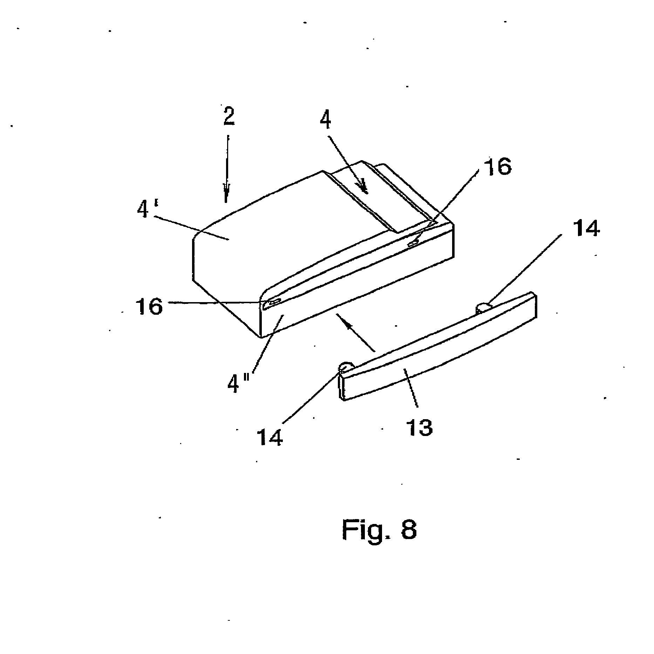

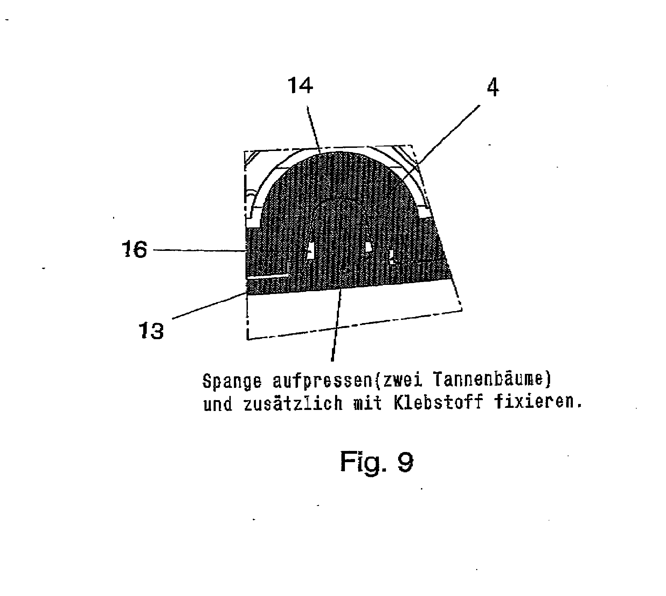

Das in Fig. 7 gezeigte Gehäuse 2 eines weiteren Schlüssels 1 umfasst ein Gehäuseteil 4 und eine am Gehäuseteil 4 seitlich befestigte Spange 13. Das Gehäuseteil 4 wiederum besteht aus einem Gehäuseunterteil 4" sowie einem Gehäuseoberteil 4'. Wie weiter anhand der Fig. 8 zu erkennen ist, weist die Spange 13 wenigstens eine Befestigungslasche 14 auf. Vorliegend besitzt die Spange 13 zwei Befestigungslsachen 14, die in etwa am jeweiligen Ende der Spange 13 angeordnet sind. Desweiteren ist am Gehäuseteil 4 eine zur Befestigungslasche 14 korrespondierende Ausnehmung 16 angeordnet. Die Spange 13 ist gemäß Fig. 9 mittels der Befestigungslasche 14 in die Ausnehmung 16 am Gehäuseteil 4 gesteckt und vorfixiert.

In weiterer Ausgestaltung ist die Spange 13 mittels Verklebung am Gehäuseteil 4 fixiert. Und zwar ist die Verklebung zwischen der Befestigungslasche 14 und der Ausnehmung 16 vorgenommen. Eine besonders sichere Befestigung der Spange 13 wird weiterhin dadurch erreicht, indem die Befestigungslasche 14 tannenbaumförmig ausgestaltet ist, was in Fig. 9 zu erkennen ist. Somit wird einerseits der Reibschluss zwischen der Spange 13 sowie dem Gehäuseteil 4 erhöht und andererseits eine Aufnahme für den Klebstoff in der Ausnehmung 16 geboten.

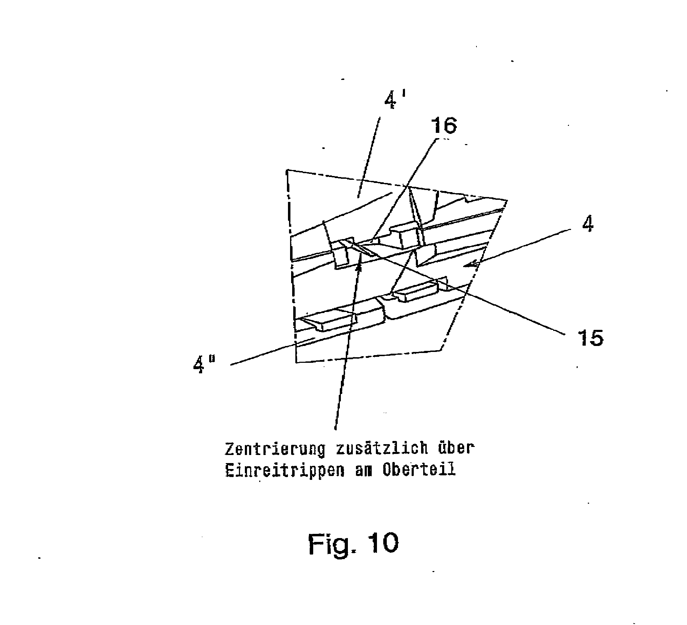

Wie weiter in Fig. 10 zu sehen ist, ist am Gehäuseteil 4, und zwar am Gehäuseoberteil 4' wenigstens ein Halteelement 15 für die Vorfixierung der Spange 13 vorgesehen. Vorliegend sind mehrere Halteelemente 15 vorhanden, die als Einreitrippen ausgestaltet sind. Mittels der Eenreitrippen 15 erfolgt eine Zentrierung der Spange 13 beim Aufstecken am Gehäuseteil 4.

Die Spange 13 besteht aus Zinkdruckguss während das Gehäuseteil 4 aus Kunststoff besteht Die Spange 13 kann auf der nach dem Aufstecken am Gehäuseteil 4 für das menschliche Auge sichtbaren Oberfläche verchromt sein. Dadurch wird die Wertanmutung erhöht und der mit einem solchen Gehäuse 2 ausgestattete Schlüssel 1 besitzt ein hochwertiges Aussehen.

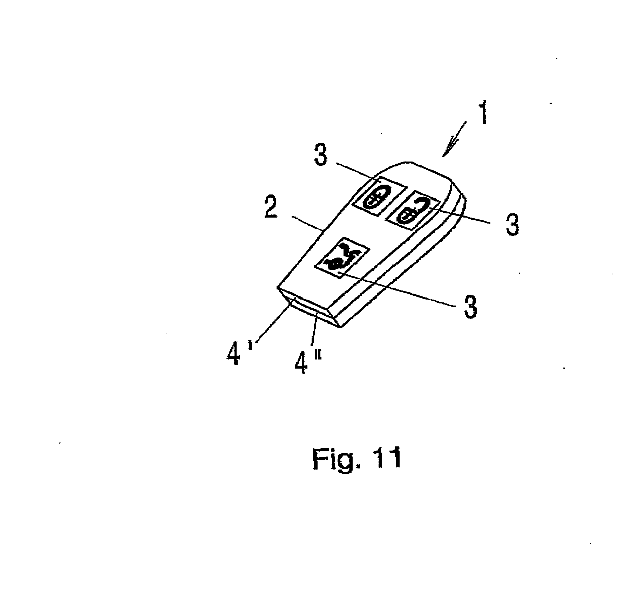

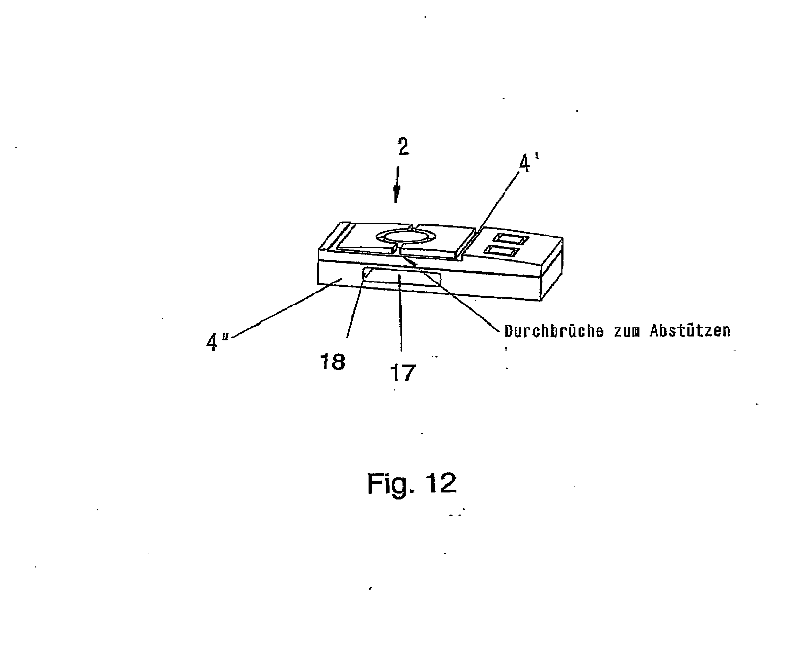

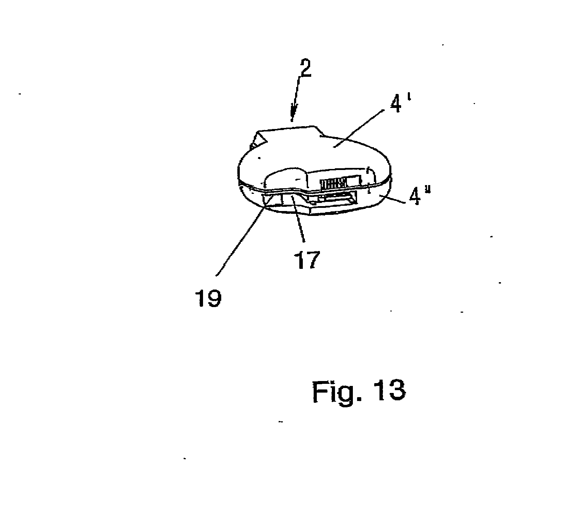

Das in Fig. 11 gezeigte Gehäuse 2 eines nochmals weiteren Schlüssels 1 umfasst ein Gehäuseunterteil 4" sowie ein Gehäuseoberteil 4', wobei die beiden Gehäuseteile 4', 4", also das Gehäuseunterteil 4" und das Gehäuseoberteil 4', jeweils aus Kunststoff bestehen und miteinander verschweißt sind. Weiter befindet sich im Gehäuse 2 wenigstens eine Aufnahme 17, wie in Fig. 12 zu sehen ist. Die Aufnahme 17 dient beispielsweise als Behältnis für eine Batterie zum Betrieb der Elektronik des Schlüssels 1. Selbstverständlich können auch weitere Aufnahmen 17 im Gehäuse 2 befindlich sein, beispielsweise eine Aufnahme 17 für einen Notschlüssel o. dgl., wie in Fig. 13 gezeigt ist.

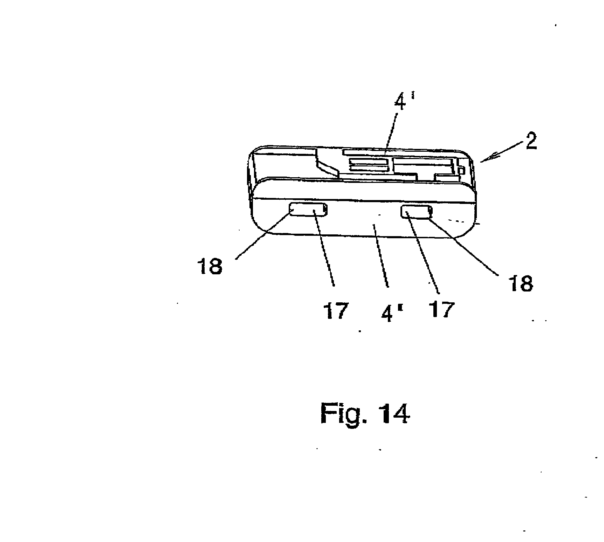

Gemäß Fig. 12 ist im Gehäuseunterteil 4" wenigstens ein zur Aufnahme 17 führender Durchbruch 18 für die Aufnahme 17 vorgesehen. Entsprechend Fig. 13 ist die die Aufnahme 17 begrenzende Wandung als Dünnstelle 19 ausgeführt. Gemäß Fig. 14 können auch mehrere Durchbrüche 18 im Gehäuse 2 befindlich sein. Das Verschweißen des Gehäuseunterteils 4" unit dem Gehäuseoberteil 4' erfolgt mittels Reibschweißen. Hierzu wird das Gehäuseunterteil 4" in einer festen unteren Reibschweißaufnahme sowie das Gehauseoberteil 4' in einer beweglichen oberen Reibschweißaufnahme positioniert. Der Durchbruch 18 und/oder die Dünnstelle 19 werden dabei mittels eines mechanischen Schiebers beim Verschweißen abgestützt.

Selbstverständlich können der Durchbruch 18 und/oder die Dünstelle 19 auch im Gehäuseoberteil 4' befindlich sein. Dann wird das Gehäuseoberteil 4' in der festen Schweißaufnahme positioniert während das Gehäuseunterteil 4" in der anderen beweglichen Schweißaufnahme positioniert ist. Die Abstützung mittels wenigstens eines mechanischen Schiebers im Durchbruch 18 und/oder in der Dünnstelle 19 beim Verschweißen erfolgt dann am Gehäuseoberteil 4'. Desweiteren kann anstelle von Reibschweißen auch ein sonstiges Schweißverfahren, beispielsweise Ultraschallschweißen, Laserschweißen, Kunststoff-Laserscbweißen, Quasi-Simultan-Laserschweißen o. dgl., zum Einsatz kommen.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann ein erfindungsgemäßes Gehäuse 2 nicht nur für elektronische Kraftfahrzeug-Schlüssel eingesetzt werden sondern auch an Fernbedienungen für Fernseh- und/oder Audiogeräte, an Mobiltelefonen o. dgl. oder an sonstigen Bedienelementen Verwendung finden.

### Bezugszeichen-Liste:

- 1:: (elektronischer) Schlüssel
- 2:: Gehäuse (des Schlüssels)
- 3:: Betätigungsorgan (am Schlüssel)
- 4:: Gehäuseteil
- 4':: Gehäuseteil / Gehäuseoberteil
- 4":: Gehäuseteil / Gehäuseunterteil
- 5:: Kappe
- 6:: Drücker
- 7:: Öffnung (in Kappe)
- 8:: Riegelelement
- 9:: Nut
- 10:: Feder
- 11:: Führungssteg
- 12:: Rastkulisse
- 13:: Spange
- 14:: Befestigungslasche
- 15:: Halteelement / Einreitrippe
- 16:: Ausnehmung
- 17:: Aufnahme
- 18:: Durchbruch
- 19:: Dünnstelle

## Patentansprüche

1. Gehäuse, insbesondere für einen elektronischen Schlüssel (1) eines Schließsystems eines Kraftfahrzeugs, umfassend ein Gehäuseteil (4), das insbesondere aus einem Gehäuseunterteil (4") sowie einem Gehäuseoberteil (4') besteht, und eine abnehmbare Kappe (5), **dadurch gekennzeichnet, dass** die Kappe (5) mittels wenigstens eines Drückers (6) verriegelbar am Gehäuseteil (4) fixiert ist.

2. Gehäuse nach Anspruch 1, **dadurch gekennzeichnet dass** der Drücker (6) seitlich und/oder oben und/oder unten an der Kappe (5) angeordnet ist.

3. Gehäuse nach Anspruch 1 oder 2, **dadurch gekennzeichnet, dass** die Kappe (5) von mehreren, insbesondere von zwei, Druckern (6) am Gehäuseteil (4) fixiert ist.

4. Gehäuse nach Anspruch 1, 2 oder 3, **dadurch gekennzeichnet, dass** der Drücker (6) wenigstens einen Führungssteg (11) zur Fixierung am Gehäuseteil (4) aufweist, dass vorzugsweise ein Riegelelement (8) am Führungssteg (11) angeordnet ist, und dass weiter vorzugsweise die Position des Drückers (6) mittels einer, bevorzugterweise zylinderförmig ausgebildeten, Rastkulisse (12) in Abzugsrichtung fixiert ist, insbesondere derart dass die Fixierung weitgehend spielfrei und/oder klapperfrei ausgestaltet ist.

5. Gehäuse nach einem der Ansprüche 1 bis 4, **dadurch gekennzeichnet, dass** die Kappe (5) mittels eines Nut-Feder-Systems (9,10), insbesondere zur Vermeidung von Verkippungen, am Gehäuseteil (4) gehalten ist.

6. Gehäuse, insbesondere für einen elektronischen Schlüssel (1) eines Schließsystems eines Kraftfahrzeugs, umfassend ein Gehäuseteil (4), das insbesondere aus einem Gehäuseunterteil (4") sowie einem Gehäuseoberteil (4') besteht, und eine am Gehäuseteil (4), insbesondere seitlich, befestigte Spange (13), **dadurch gekennzeichnet, dass** die Spange (13) wenigstens eine Befestigungslasche (14) aufweist, dass am Gehäuseteil (4) eine zur Befestigungslasche (14) korrespondierende Ausnehmung (16) angeordnet ist, und dass die Spange (13) mittels der Befestigungslasche (14) in die Ausnehmung (16) am Gehäuseteil (4) gesteckt und vorfixiert ist.

7. Gehäuse nach einem der Ansprüche 1 bis 6, **dadurch gekennzeichnet, dass** die Spange (13) mittels Verklebung, insbesondere zwischen der Befestigungslasche (14) und der Ausnehmung (16), am Gehäuseteil (4) fixiert ist.

8. Gehäuse nach einem der Ansprüche 1 bis 7, **dadurch gekennzeichnet, dass** die Befestigungslasche (14) tannenbaumförmig ausgestaltet ist, und dass vorzugsweise die Spange (13) zwei, insbesondere in etwa am jeweiligen Ende der Spange (13) angeordnete, Befestigungslaschen (14) aufweist.

9. Gehäuse nach einem der Ansprüche 1 bis 8, **dadurch gekennzeichnet, dass** am Gehäuseteil (4) wenigstens ein Halteelement (15), insbesondere eine Einreitrippe, für die Vorfixierung der Spange (13) vorgesehen ist, insbesondere derart dass eine Zentrierung der Spange (13) beim Aufstecken am Gehäuseteil (4) mittels des Halteelements (15) erfolgt.

10. Gehäuse nach einem der Ansprüche 1 bis 9, **dadurch gekennzeichnet, dass** die Spange (13) aus Zinkdruckguss besteht, dass vorzugsweise die Spange (13) auf der nach dem Aufstecken am Gehäuseteil (4) sichtbaren Oberfläche verchromt ist, und dass weiter vorzugsweise das Gehäuseteil (4) aus Kunststoff besteht.

11. Gehäuse, insbesondere für einen elektronischen Schlüssel (1) eines Schließsystems eines Kraftfahrzeugs, umfassend zwei Gehäuseteile (4', 4"), insbesondere ein Gehäuseunterteil (4") sowie einem Gehäuseoberteil (4'), und mit wenigstens einer Aufnahme (17), insbesondere für eine Batterie, einen Notschlüssel o. dgl., wobei die beiden Gehäuseteile (4', 4") miteinander verschweißt sind, **dadurch gekennzeichnet, dass** wenigstens ein Durchbruch (18) und/oder eine Dünnstelle (19) für die Aufnahme (17) in dem einen Gehäuseteil (4"), insbesondere im Oehiuseuntertei1 (4"), vorgesehen ist.

12. Gehäuse nach einem der Ansprüche 1 bis 11, **dadurch gekennzeichnet, dass** die beiden Gehäuseteile (4', 4"), insbesondere das Gehäuseunterteil (4") sowie das Gehäuseoberteil (4'), aus Kuntstoff bestehen.

13. Gehäuse nach einem der Ansprüche 1 bis 12, **dadurch gekennzeichnet, dass** das eine Gehäuseteil (4"), insbesondere das Gehäuseunterteil (4"), in einer festen, Insbesondere unteren, Schweißaufnahme positioniert wird, dass vorzugsweise das andere Gohäuseteil (4'), insbesondere das Gehäuseoberteil (4'), in einer beweglichen, insbesondere oberen, Schweißaufnahme positioniert wird, und dass weiter vorzugsweise der Durchbruch (18) und/oder die Dünnstelle (19) mittels eines mechanischen Schiebers beim Verschweißen abgestützt wird.

14. Gehäuse nach einem der Ansprüche 1 bis 13, **dadurch gekennzeichnet, dass** das Verschweißen der beiden Gehäuseteile (4', 4"), insbesondere des Gehäuseunterteils (4") mit dern Gehäuseoberteil (4'), mittels Reibschweißen, Ultraschallschweißen, Laserschweißen, Quasi-Simultan-Laserschweißen o. dgl. erfolgt.
